## Europäisches Patentamt

## European Patent Office

## Office européen des brevets

(19)

(11) Veröffentlichungsnummer: **0 043 015**
**B1**

(12) **EUROPÄISCHE PATENTSCHRIFT**

(45) Veröffentlichungstag der Patentschrift:
**14.12.83**

(51) Int. Cl.³: **G 03 B 17/26**

(21) Anmeldenummer: **81104527.7**

(22) Anmeldetag: **12.06.81**

(54) Filmkassette für einen lichtempfindlichen Filmstreifen.

(30) Priorität: **25.06.80 DE 3023819**

(43) Veröffentlichungstag der Anmeldung:
**06.01.82 Patentblatt 82/1**

(45) Bekanntmachung des Hinweises auf die Patenterteilung:
**14.12.83 Patentblatt 83/50**

(84) Benannte Vertragsstaaten:
**BE CH DE FR GB IT LI**

(56) Entgegenhaltungen:
**EP - A - 0 014 309**

(73) Patentinhaber: **AGFA-GEVAERT Aktiengesellschaft,
D-5090 Leverkusen 1 (DE)**

(72) Erfinder: **Engelsmann, Dieter, Ing.grad.,
Ter-Mees-Strasse 33, D-8025 Unterhaching (DE)**
Erfinder: **Hoffacker, Franz, Dipl.-Ing., Schumannweg 11,
D-4018 Langenfeld (DE)**
Erfinder: **Kovacic, Guido, Schulstrasse 7, D-5463 Unkel
(DE)**
Erfinder: **Lermann, Peter, Dr., P. Feldkirchen,
D-8152 Naring 106 1/2 (DE)**
Erfinder: **Lührig, Hermann, Dipl.-Ing.,
Heinrich-von-Kleist-Strasse 12,
D-5090 Leverkusen 1 (DE)**
Erfinder: **Wagner, Karl, Dr., Wackenroder Strasse 8,
D-8000 München 83 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Filmkassette für einen lichtempfindlichen Filmstreifen

Die Erfindung betrifft eine Filmkassette für einen für die Aufnahme mehrerer Bilder geeigneten, lichtempfindlichen Filmstreifen, bestehend aus einer lichtundurchlässigen flachen biegsamen Tasche von etwa der Länge des Filmstreifens und einer senkrecht zur Taschenlänge verlaufenden, mit Lichtabdichtungsmitteln versehenen Kassetenöffnung (dem sogenannten Kassettenmaul) zum Durchtreten des Filmstreifens.

Aus der prioritätsälteren europäischen Patentanmeldung EP Nr. 0014309 A1 ist eine derartige Filmkassette bereits bekannt, die als biegsame flache Tasche in eine Aufnahmekamera einlegbar ist. Um ein Knicken oder Falten der Tasche beim Einlegen in eine Kamera und somit eine Behinderung des Aus- und Einschiebens des Filmstreifens aus der und in die Tasche zu vermeiden, sind die Taschen mit quer zu deren Länge verlaufenden Rillen oder balgenartigen Falten versehen, um die sich die Tasche beim Biegen verformt. Um ein Anstossen des Filmstreifens an diese Falten oder Rillen zu vermeiden, sind in die Taschen hineinragende Gleitbahnen erforderlich. In einer anderen Ausführungsform sind die flachen Taschenwände durchwölbbar oder dehnbar ausgeführt, um ein Knicken der Taschen beim Verformen zu verhindern. Hierbei sind seitlich in die Tasche Abstandshalter eingebracht. Bei einer engen Krümmung besteht bei dieser Ausführungsform jedoch die Gefahr, dass der Filmstreifen eingeklemmt wird und Störungen beim Ein- und Ausziehen des Filmstreifens auftreten.

Der Erfindung liegt die Aufgabe zugrunde, eine Filmkassette dieser Art dahingehend zu verbessern und zu vereinfachen, dass bei gebogener Anordnung der Kassette in einer Kamera die Wahrscheinlichkeit weiter vermindert wird, dass bei teilweise entnommenen Filmstreifen sich die Flachseiten der Kassette aneinanderlegen oder gar Knicke bilden und das Zurückschieben des Filmstreifens in die Kassette behindert ist.

Diese Aufgabe wird erfindungsgemäss dadurch gelöst, dass die Tasche aus einem Oberteil und einem Unterteil besteht, wobei das Oberteil mit dem Unterteil nur im Bereich der Kassettenöffnung fest verbunden ist und das Oberteil von dem Unterteil im Randbereich umfasst und darin verschiebbar angeordnet ist, dass die drei gegeneinander bewegbaren Kanten des Unterteiles und Oberteiles solche Winkel bilden, dass sich lichtdichte Labyrinthe ergeben und der Filmstreifen auch im gebogenen Zustand der Tasche frei beweglich bleibt.

Durch die verschiebbare Anordnung des Oberteiles in dem Unterteil zeigt sich überraschenderweise, dass beim Biegen der Kassette zum Einlegen in die Kamera keine Falten und Knicke am Ober- oder Unterteil entstehen, die den Auszug oder das Wiedereinschieben des Filmstreifens aus und in die Kassette behindern.

Die beim Biegen der Kassette entstehenden unterschiedlichen Längen für das Oberteil und das Unterteil werden in einfacher Weise durch das Gleiten des Oberteiles im Unterteil ausgeglichen und durch die Ausbildung des Unterteiles mit den die freien Kanten des Oberteiles umfassenden drei Rändern die Lichtsicherheit der Kassette erhalten.

Diese einfache Ausführungsform erfordert keine die Materiallängen ausgleichenden Faltungen des Kassettenoberteiles und -unterteiles zum Längenausgleich zwischen Ober- und Unterteil beim Biegen der Kassette und keine dadurch erforderlichen, zusätzlich in die Kassette einzubringenden Gleitbahnen für den Filmstreifen, die an den Faltungen vorbeiführen.

In einer vorteilhaften Ausführungsform der Kassette sind die freien Ränder des Oberteiles mindestens entlang der Längskanten als Abstandshalter und gleichzeitig als zusätzliches Labyrinth zum Film hin abgewinkelt oder um 180° umgelegt. Durch diese Massnahme wird sowohl der freie Raum für das Ausziehen und Einschieben des Filmstreifens gesichert als auch die Labyrinthwirkung verstärkt und somit die Lichtsicherheit der Kassette verbessert.

In einer anderen vorteilhaften Ausführungsform der Kassette sind mindestens entlang der Längskanten des Unterteiles der Tasche Streifen als Abstandshalter und Labyrinth vorgesehen. Durch die Streifen, die in das Unterteil der Tasche eingeklebt oder eingeschweisst werden, ist der freie Raum für den Filmstreifen ebenfalls gesichert und es wird die Lichtsicherheit durch weitere Umlenkung des Lichtes im Labyrinth verbessert.

Die Abstandshalter sind so angeordnet, dass ihr Abstand voneinander quer zur Längsrichtung des Filmstreifens grösser ist als die grösste Breite des Filmstreifens und sind so ausgebildet, dass ihre wirksame Dicke grösser ist als die grösste Dicke des Filmstreifens. Hierdurch entsteht ein Filmkanal, in welchem der Filmstreifen auch im verwendungsgemäss gebogenen Zustand der Kassette frei beweglich ist.

Die Erfindung wird anhand von Zeichnungen näher erläutert. Es zeigen:

Fig. 1 eine Draufsicht auf die Kassette,

Fig. 2 einen Längsschnitt durch die Kassette,

Fig. 3 einen Querschnitt durch eine Kassette mit abgewinkeltem Oberteil,

Fig. 4 einen Querschnitt durch eine Kassette mit umgelegten Kanten des Oberteiles,

Fig. 5 einen Querschnitt durch eine Kassette mit zusätzlich eingebrachten Abstandshaltern, und

Fig. 6 einen Querschnitt durch eine Kassette mit Abstandshaltern und einer bildfreien Filmführung.

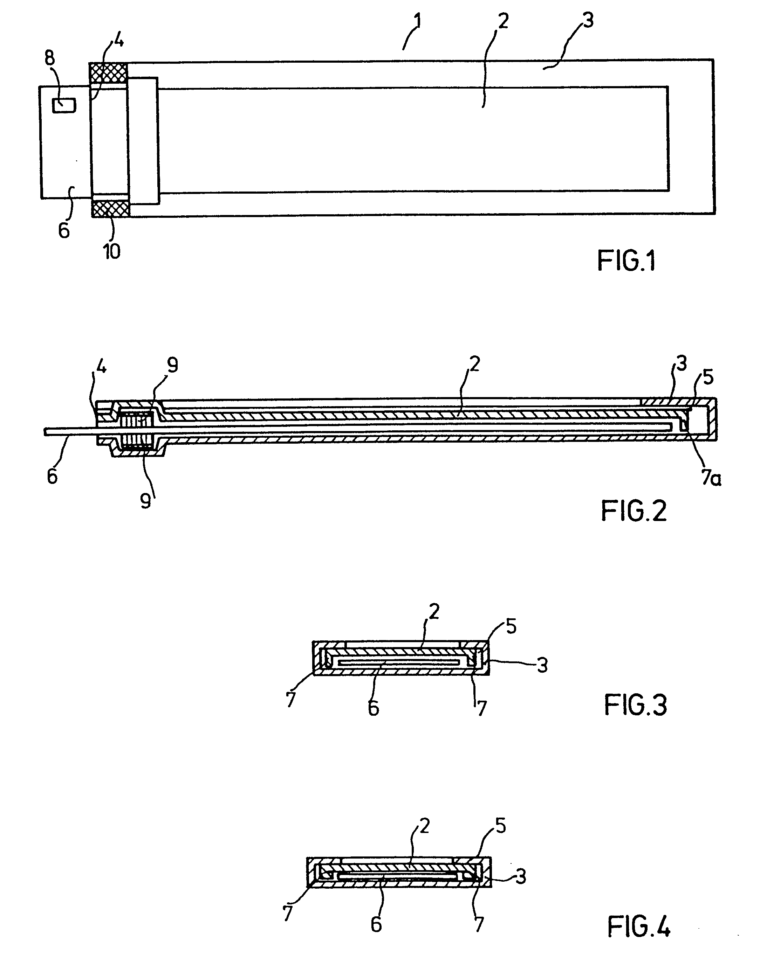

Die Filmkassette nach den Fig. 1 und 2 wird durch eine längliche, gegenüber ihrer Länge und Breite dünne Tasche 1 gebildet, die an ihrer Schmalseite eine Öffnung, vorzugsweise einen Schlitz als Kassettenmaul 4 zum Durchtritt des in ihr befindlichen Filmstreifens 6 aufweist. Der Filmstreifen 6 ist etwas länger als die Tasche 1 und weist je Bild mindestens ein Perforationsloch 8 längs einer seiner Längskanten auf. Um den im Inneren der Tasche 1 untergebrachten Filmstreifen 6 gegen unbeabsichtigten Lichteinfall zu schützen, ist das Kassettenmaul 4 mit mindestens einem Lichtabdichtungsstreifen 9, z.B. einem Filz- oder Plüschstreifen, ausgefüttert. Der zu seiner Erfassung aus der Tasche 1 vorstehende Filmanfang kann zur Beseitigung seiner Lichtleitfähigkeit gerastert und ausserdem gegen unbeabsichtigtes Herausziehen, z.B. durch ein Klebeband, gesichert sein.

Die Tasche 1 gemäss dem Ausführungsbeispiel ist aus lichtundurchlässigem elastischem Kunststoff oder Papier hergestellt. Sie besteht im wesentlichen aus 2 Teilen, dem Unterteil 3 und dem Oberteil 2. Das Unterteil 3 ist im Bereich der Seite des Kassettenmaules 4 zur Aufnahme eines Lichtabdichtungsstreifens 9 etwas ausgewölbt und an den 3 übrigen Kanten nach oben und innen umgefaltet, so dass ein oben offener Köcher entsteht.

Um ein leichtes Verformen des Unterteiles beim Einlegen in eine Kamera zu ermöglichen, werden die nach innen umgelegten oder umgeformten Teile längs der langen Kanten sehr schmal gehalten. Die dem Kassettenmaul 4 gegenüberliegende kurze Kante des Unterteiles 3 kann mit ihrem umgelegten Teil weiter in die Kassette ragen, da diese beim Einlegen in eine Kamera nicht gebogen wird.

In das Unterteil 3 sind der Filmstreifen 6 und das Oberteil 2 eingeschoben. Das Oberteil 2 ist etwas kürzer als das Unterteil und besitzt im Bereich des Kassettenmaules 4 ebenfalls eine Auswölbung zur Aufnahme eines Lichtabdichtungsstreifens 9.

Oberteil 2 und Unterteil 3 sind durch eine Verklebung oder Verschweissung 10 nur im Bereich des Kassettenmaules 4 fest miteinander verbunden. Das Oberteil 2 ist so im Unterteil 3 frei beweglich.

Wird die Kassette zum Einlegen in eine Kamera gebogen, so gleitet das Oberteil im Unterteil entsprechend der verschiedenen Biegeradien, ohne dass Falten oder Knicke entstehen. Auch im stark gebogenen Zustand der Kassette in einer Kamera kann der Filmstreifen, ohne an eine Falte oder einen Knick anzustossen, wieder in die Kassette eingeschoben werden. Erleichtert werden das Einschieben und das Ausziehen des Filmstreifens 6, wenn durch einen Abstandshalter 7, 8 der freie Raum für den Filmstreifen erhalten bleibt. Dies kann auf verschiedene Art und Weise erreicht werden.

Fig. 3 zeigt eine Ausführungsform der Kassette, in welcher die Längskanten des Oberteiles 2 um etwas mehr als die Dicke des Filmstreifens 6 umgebogen sind und auf dem Boden des Unterteiles 3 aufliegen. Vorteilhafterweise wird durch diese Ausführungsform auch die Lichtsicherheit wesentlich verbessert, zum einen, da der Lichtweg verlängert und das Licht um weitere Kanten des Labyrinthes gelangen muss, zum anderen wird durch die Auflage der Längskanten 7 des Oberteiles 2 auf dem Boden des Unterteiles 3 eine zusätzliche Lichtabdichtung erreicht. Durch die Wahl der Höhe der abgewinkelten Kanten 7 in bezug auf die Höhe des Innenraumes des Unterteiles 3 kann eine federnde Anpressung der Kanten 7 auf den Boden des Unterteiles 3 erreicht werden. Auch die schmale Kante 7a des Oberteiles kann zur Erzielung einer besseren Lichtsicherheit abgewinkelt werden, wie es in Fig. 2 dargestellt ist.

Fig. 4 zeigt eine Ausführungsform, in welcher die Kanten 7 des Oberteiles 2 um 180° umgelegt und am Oberteil angelegt, angeklebt oder angeschweisst sind. Je nach dem zur Herstellung der Kassette verwendeten Material kann diese Ausführungsform von Vorteil sein, da sie einer Verformung leichter folgt als eine um 90° abgewinkelte Kante. Das für das Oberteil 2 verwendete Material muss dann aber dicker sein als die Dicke des Filmbandes 6, um einen freien Raum zur Bewegung des Filmbandes zu erhalten. Die Vorteile bezüglich der Lichtsicherheit entsprechen denen der Ausführungsform nach Fig. 3.

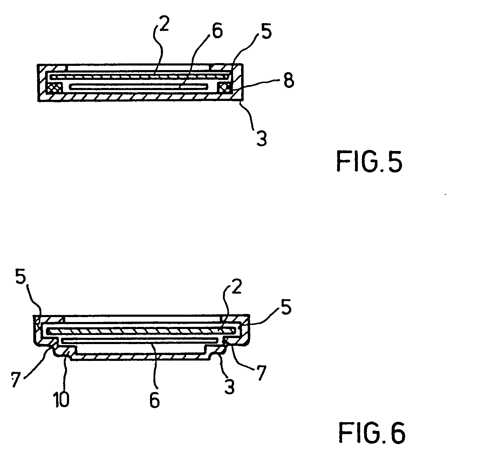

In Fig. 5 ist eine Ausführungsform dargestellt, in welcher zusätzliche Streifen 8 als Abstandshalter entlang der Längskanten des Unterteiles 3 eingearbeitet sind. Diese Streifen 8 sind aus einem biegsamen Material hergestellt und in das Unterteil eingeklebt oder eingeschweisst. Ihre Dicke ist etwas grösser als die Dicke des Filmstreifens 6 und ihre Breite so bemessen, dass die Führung des in dieser Ausführungsform blattförmigen Oberteiles 2 ausreichend ist. Die Führung des Oberteiles 2 erfolgt zwischen den nach innen umgefalteten Kanten des Unterteiles 3 und den Streifen 8, wodurch auch die Lichtsicherheit durch mehrfaches Umlenken des Lichtes in dem Labyrinth 5 sehr gut ist.

Oft ist es erwünscht oder erforderlich, dass mindestens die das Bild tragende Seite des Filmstreifens nicht mit der Kassette in Berührung kommt, um Verkratzungen, Verschrammungen oder andere Beschädigungen der oft empfindlichen photographischen Emulsion zu vermeiden. Fig. 6 zeigt eine Ausführungsform einer Kassette, in welcher durch Abstufungen in der Breite des Unterteiles 3 sowohl ein Labyrinth 5 für die Lichtsicherheit und die Führung des in dem Unterteil 3 beweglichen Oberteiles 2, ein freier Raum für den Filmstreifen 6 durch Abstandshalter 7 und eine bildfreie Führung des Filmstreifens 6 durch Auflage des Filmstreifens 6 nur an den Rändern 10 der längeren Seite der Kassette erreicht wird. Hierbei ist das Oberteil 2 in einfacher Weise blattförmig ausgebildet. Das Unterteil kann aus einem gezogenen Profil aus elastischem Kunststoff oder auch als Spritzteil hergestellt werden.

Selbstverständlich sind auch noch andere Ausführungsbeispiele als die in den Figuren gezeigten möglich. So können die Labyrinthe auch auf verschiedene andere Art und Weise gestaltet werden. Für die Herstellung der Kassette können die verschiedensten Materialien wie Metallfolien, Kunststoffolien oder lichtsichere Papiere verwendet werden.

Allen Ausführungsbeispielen ist gemeinsam, dass die Kassette 1 in ihrem Inneren einen den Filmstreifen 6 aufnehmenden Hohlraum aufweist, der auch beim Biegen der Kassette 1 quer zu der Längsrichtung der Taschenflachseiten zum Einlegen der Kassette in eine Kamera stets einen offenen und glatten Kanal zum Herausziehen und Wiedereinschieben des Filmstreifens 6 darstellt.

## Patentansprüche

1. Filmkassette für einen für die Aufnahme mehrerer Bilder geeigneten, lichtempfindlichen Filmstreifen, bestehend aus einer lichtundurchlässigen flachen biegsamen Tasche von etwa der Länge des Filmstreifens und einer senkrecht zur Taschenlänge verlaufenden, mit Lichtabdichtungsmitteln versehenen Kassettenöffnung zum Durchtreten des Filmstreifens, dadurch gekennzeichnet, dass die Tasche (1) aus einem Oberteil (2) und einem Unterteil (3) besteht, wobei das Oberteil (2) mit dem Unterteil (3) nur im Bereich der Kassettenöffnung (4) fest verbunden ist und das Oberteil (2) von dem Unterteil (3) im Randbereich umfasst und darin verschiebbar angeordnet ist, dass die drei gegeneinander bewegbaren Kanten des Unterteiles (3) und Oberteiles (2) solche Winkel bilden, dass sich lichtdichte Labyrinthe (5) ergeben und der Filmstreifen (6) auch im gebogenen Zustand der Tasche (1) frei beweglich bleibt.

2. Filmkassette nach Anspruch 1, dadurch gekennzeichnet, dass die freien Ränder des Oberteiles (2) mindestens entlang der Längskanten als Abstandshalter (7) und gleichzeitig zur Bildung eines Labyrinthes (5) im Zusammenwirken mit dem Unterteil (3) zum Film hin abgewinkelt sind.

3. Filmkassette nach Anspruch 1, dadurch gekennzeichnet, dass die freien Ränder des Oberteiles (2) mindestens entlang der Längskanten als Abstandshalter (7) und zur Bildung eines Labyrinthes (5) im Zusammenwirken mit dem Unterteil (3) um 180° zum Film hin umgelegt sind.

4. Filmkassette nach Anspruch 1, dadurch gekennzeichnet, dass mindestens entlang der Längskanten des Unterteils (3) der Taschen (1) Streifen (8) als Abstandshalter (7) und zur Bildung eines Labyrinthes (5) im Zusammenwirken mit dem Unterteil (3) vorgesehen sind.

5. Filmkassette nach einem der Ansprüche 2 bis 4, dadurch gekennzeichnet, dass die Abstandshalter (7, 8) voneinander einen Abstand quer zur Längsrichtung haben, welcher grösser ist als die grösste Breite des Filmstreifens (6).

6. Filmkassette nach einem der Ansprüche 2 bis 4, dadurch gekennzeichnet, dass die Abstandshalter (7, 8) eine wirksame Dicke besitzen, welche grösser ist als die grösste Dicke des Filmstreifens (6).

7. Filmkassette nach Anspruch 1, dadurch gekennzeichnet, dass das Unterteil (3) aus einem Teil durch Ziehen oder Spritzen hergestellt ist und durch seine Formgebung eine Führung für das verschiebbare Oberteil (2) und im Zusammenwirken mit dem Oberteil (2) ein Labyrinth (5), Abstandshalter (7) und an den Seiten eine Filmführung (10) besitzt, die es erlaubt, den das Bild tragenden Teil des Filmstreifens (6) ohne Berührung zu führen.

## Revendications

1. Cassette pour une bande de pellicule photosensible appropriée pour la prise de vue de plusieurs images, cette cassette étant constituée d'une poche flexible, plate, étanche à la lumière et ayant à peu près la longueur de la bande de pellicule, ainsi que d'une ouverture s'étendant perpendiculairement à la longueur de la poche et comportant des éléments d'étanchéité à la lumière pour permettre le passage de la bande de pellicule, caractérisée en ce que la poche (1) est constituée d'une partie supérieure (2) et d'une partie inférieure (3), la partie supérieure (2) étant assemblée fermement à la partie inférieure (3) uniquement dans la zone de l'ouverture (4) de la cassette, tandis que la partie supérieure (2) est entourée par la partie inférieure (3) dans la zone des bords où elle peut se déplacer, les trois bords de la partie inférieure (3) et de la partie supérieure (2), qui peuvent se déplacer l'un contre l'autre, formant des angles tels qu'il en résulte des labyrinthes (5) étanches à la lumière et que la bande de pellicule (6) peut continuer à se déplacer librement même lorsque la poche (1) est pliée.

2. Cassette pour pellicule suivant la revendication 1, caratérisée en ce que les bords libres de la partie supérieure (2) sont pliés au moins le long des bords longitudinaux en guise d'éléments d'écartement (7), tandis qu'ils sont en même temps pliés en direction de la pellicule afin de former un labyrinthe (5) en coopération avec la partie inférieure (3).

3. Cassette pour pellicule suivant la revendication 1, caractérisée en ce que les bords libres de la partie supérieure (2) sont pliés au moins le long des bords longitudinaux en guise d'éléments d'écartement (7) et sont également pliés sur 180° en direction de la pellicule afin de former un labyrinthe (5) en coopération avec la partie inférieure (3).

4. Cassette pour pellicule suivant la revendication 1, caractérisée en ce que, au moins le long des bords longitudinaux de la partie inférieure (3) de la poche (1), on prévoit des bandes (8) en guise d'éléments d'écartement (7) et afin de former un labyrinthe (5) en coopération avec la partie inférieure (3).

5. Cassette pour pellicule suivant l'une des revendications 2 à 4, caractérisée en ce que les éléments d'écartement (7, 8) sont écartés l'un de l'autre, transversalement au sens longitudinal, d'une distance qui est supérieure à la largeur maximale de la bande de pellicule (6).

6. Cassette pour pellicule suivant l'une des revendications 2 à 4, caractérisée en ce que les éléments d'écartement (7, 8) ont une épaisseur active qui est supérieure à l'épaisseur maximale de la bande de pellicule (6).

7. Cassette pour pellicule suivant la revendication 1, caractérisée en ce que la partie inférieure (3) est réalisée, à partir d'une pièce, par emboutissage ou par injection et, suite à son façonnage, comporte un guide pour la partie supérieure mobile (2) et, en coopération avec cette partie supérieure (2), comporte un labyrinthe (5), des éléments d'écartement (7) et, sur les côtés, un guide de pellicule (10) permettant de guider, sans contact, la partie de la bande de pellicule (6) qui comporte l'image.

## Claims

1. A film cassette for a photosensitive film strip suitable for taking several pictures, consisting of a light-proof, flat, flexible case substantially equal in length to the strip of film and a cassette opening for the passage of the film strip, which opening extends perpendicularly to the length of the case and which is provided with ligth-sealing means, characterized in that the case (1) consists of a top part (2) and a bottom part (3), the top part (2) being fixedly connected to the bottom part (3) solely in the vicinity of the cassette opening (4) and the top part (2) being surrounded by the bottom part (3) in the edge regions and being arranged for displacement in the bottom part (3), and in that the three edges of the bottom part (3) and top part (2) which are displaceable relative to one another form such angles that light-proof labyrinths (5) are formed and, even if the case (1) is bent, the strip of film (6) retains its freedom of movement.

2. A film cassette according to claim 1, characterized in that the free edges of the top part (2)—at least along the longitudinal edges—are bent downwards towards the film to form spacers (7) and, at the same time, to form a labyrinth (5) in co-operation with the bottom part (3).

3. A film cassette according to claim 1, characterized in that the free edges of the top part (2)—at least along the longitudinal edges—are folded over through 180° towards the film to form spacers (7) and to form a labyrinth (5) in co-operation with the bottom part (3).

4. A film cassette according to claim 1, characterized in that strips (8) are provided at least along the longitudinal edges of the bottom part (3) of the cases (1) to act as spacers (7) and to form a labyrinth (5) in co-operation with the bottom part (3).

5. A film cassette according to claims 2 to 4, characterized in that the spacers (7, 8) are separated from one another transversely of the longitudinal direction by a distance which is greater than the maximal width of the film strip (6).

6. A film cassette according to claims 2 to 4, characterized in that the spacers (7, 8) have an effective thickness which is greater than the maximal thickness of the film strip (6).

7. A film cassette according to claim 1, characterized in that the bottom part (3) is made in one piece by drawing or injection moulding and, by virtue of its shape, forms a guide for the displaceable top part (2) and, in co-operation with the top part (2), a labyrinth (5) and comprises spacers (7), and at its sides, a film guide (10) which enables that part of the film strip (6) carrying the picture to be guided without contact.

FIG.1

FIG.2

FIG.3

FIG.4

FIG.5

FIG.6